(19) Europäisches Patentamt
European Patent Office
Office européen des brevets

(11) EP 3 862 359 B1

(12) **EUROPÄISCHE PATENTSCHRIFT**

(45) Veröffentlichungstag und Bekanntmachung des Hinweises auf die Patenterteilung:
**03.04.2024 Patentblatt 2024/14**

(21) Anmeldenummer: **20155849.1**

(22) Anmeldetag: **06.02.2020**

(51) Internationale Patentklassifikation (IPC):
***C07F 7/18*** *(2006.01)*

(52) Gemeinsame Patentklassifikation (CPC):
**C07F 7/1804**

# (54) VERFAHREN ZUR HERSTELLUNG VON POLYSULFANSILANEN

METHOD FOR PRODUCING POLYSULFANE SILANES

PROCÉDÉ DE FABRICATION DE POLYSULFANSILANES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.08.2021 Patentblatt 2021/32**

(73) Patentinhaber: **Evonik Operations GmbH**
**45128 Essen (DE)**

(72) Erfinder:
- **DRÖGE, Helmut**
  **53332 Bornheim (DE)**
- **HERMEKE, Julia**
  **79618 Rheinfelden (DE)**
- **BOLDT, Kai Dieter**
  **63452 Hanau (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 3 489 246 DE-A1-102017 221 234**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 862 359 B1

## Beschreibung

Gegenstand der Erfindung ist ein Verfahren zur Herstellung von Polysulfansilanen.

Aus EP 1130023 ist die Herstellung von Organosilylalkylpolysulfanen der Formel $(R^1R^2R^3Si\text{-}R^4\text{-})_2S_q$ aus dem Organosilylalkylhalogenid der Formel $R^1R^2R^3Si\text{-}R^4\text{-}X$ bekannt. Die Umsetzung wird durchgeführt, indem in einem polaren organischen Lösungsmittel elementarer Schwefel und das Organylalkylhalogenid vorgelegt und zu dieser Suspension wasserfreies bzw. nahezu wasserfreies ionisches Sulfid gegeben wird. Wegen der Hydrolyseanfälligkeit der Si-Alkoxy-Bindungen des Organosilylalkylhalogenids müssen die ionischen Sulfide wasserfrei bzw. nahezu wasserfrei sein.

Aus EP 1700861 ist bekannt, schwefelhaltige Alkoxysilane unter Verwendung von wasserhaltigen Schwefelungsreagentien in Alkohol zu synthetisieren. Bei der Verwendung von unterschiedlichen Rohstoffen werden große Unterschiede im Monomergehalt der erhaltenen polysulfidischen Alkoxysilane festgestellt. Eine verlässliche, gleichmäßige Produktqualität im industriellen Maßstab lässt sich nur bei durchschnittlichen S-Kettenlängen über 3 erzielen. Zudem ist der Einsatz von vier Feststoffen in dem bekannten Verfahren nachteilig für den industriellen Maßstab.

Aus WO 2008025580 A1 ist bekannt, schwefelhaltige Alkoxysilane der Formel $[R(R)(R'O)Si\text{-}R''\text{-}]_2S_m$ herzustellen, wobei der Alkalihydroxidgehalt aller Einsatzstoffe < 0,44 Gew.-% ist.

Aus EP 2149579 ist ein Verfahren zur Herstellung von Organosilanen der allgemeinen Formel I,

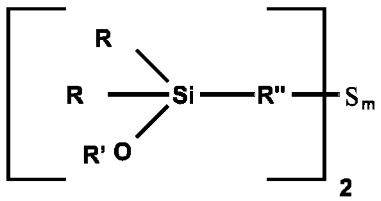

I

durch Umsetzung von (Halogenorganyl)alkoxysilan der Formel II,

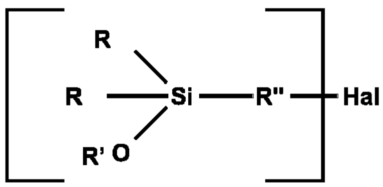

II

mit wasserhaltigem Alkalihydrogensulfid, Schwefel und Alkalicarbonat in Alkohol, wobei das molare Verhältnis (Halogenorganyl)alkoxysilan der Formel II zu Alkalihydrogensulfid zwischen 1:0,4 und 1:0,75 ist und das molare Verhältnis Alkalihydrogensulfid zu Alkalicarbonat zwischen 1:0,5 und 1:1,5 ist, bekannt.

Aus DE 10201 7221 234 A1 und EP 3489246 ist ein Verfahren zur Herstellung von Bis(triethoxysilylpropyl)sulfid bekannt, wobei zu einer Lösung von Chlorpropyltrithoxysilan in Ethanol $Na_2S$ portionsweise zugegeben wird, das Produkt filtriert und destilliert wird.

Nachteil der bekannten Verfahren ist, dass bei der Verwendung von Natriumcarbonat und/oder Natriumhydrogencarbonat die Suspension nach der Reaktion sehr viskos anfallen kann und dadurch mit herkömmlichen Apparaten (Rührkessel) keine vollständige Entfernung des Lösungsmittels und/oder keine Filtration möglich ist.

Gegenstand der Erfindung ist ein Verfahren zur Herstellung von Polysulfansilanen der Formel I

$$(R^1O)_{3-m}R^2{}_mSi\text{-}R^3\text{-}S_xR^3\text{-}SiR^2{}_m(OR^1)_{3-m} \qquad I,$$

wobei $R^1$ gleich oder verschieden sind und C1-C10-Alkylgruppen, vorzugsweise $CH_3$ oder $C_2H_5$, Phenylgruppen oder Alkylpolyethergruppen $-(R'\text{-}O)_r\text{-}R''$ sind, mit R' gleich oder verschieden sind und eine verzweigte oder unverzweigte, gesättigte oder

ungesättigte, aliphatische, aromatische oder gemischt aliphatische/aromatische zweibindige C1-C30-Kohlenwasserstoffgruppe sind, r eine ganze Zahl von 1 bis 30 und R" unsubstituierte oder substituierte, verzweigte oder unverzweigte einbindige Alkyl-, Alkenyl-, Aryl- oder Aralkylgruppe sind,

$R^2$ gleich oder verschieden sind und C6-C20-Arylgruppen, C1-C10-Alkylgruppen, C2-C20-Alkenylgruppen, C7-C20-Aralkylgruppen oder Halogene sind,

$R^3$ gleich oder verschieden sind und eine verzweigte oder unverzweigte, gesättigte oder ungesättigte, aliphatische,

aromatische oder gemischt aliphatische/aromatische zweibindige C1-C30-Kohlenwasserstoffgruppen sind, und m gleich oder verschieden sind und 0, 1, 2 oder 3, vorzugsweise 0, sind,
x ist 1-10, vorzugsweise 2-4,
durch Umsetzung von Silan der Formel II

$$(R^1O)_{3-m}R^2{}_mSi\text{-}R^3\text{-}Hal \qquad II$$

wobei $R^1$, $R^2$, $R^3$ und m die oben genannten Bedeutungen haben und
Hal ein Halogen, bevorzugt Chlor oder Brom, besonders bevorzugt Chlor ist,
mit einem oder mehreren Metallsulfiden der Formel III

$$Me(SH)f \text{ und / oder } Me_{3\text{-}f}S_{x\text{-}y} \qquad III$$

wobei Me ein Element der 1. oder 2. Hauptgruppe, vorzugsweise der 1. Hauptgruppe, besonders bevorzugt Na, ist,
für Me der 1.Hauptgruppe f=1 ist und für Me der 2.Hauptgruppe f=2 ist und
y einen Wert von 0 bis x-1 ist,
optional in Gegenwart eines Salzes oder mehrere Salze von einwertigen oder mehrwertigen Säuren, vorzugsweise Metallcarbonate oder Metallhydrogencarbonate, besonders bevorzugt Natriumcarbonat oder Natriumhydrogencarbonat oder entsprechende Gemische,
unter optionalem Zusatz von y Mol Schwefel
in wässriger $R^1$-OH-Lösung wobei $R^1$ die oben genannte Bedeutung hat,
der Wassergehalt der wässriger $R^1$-OH-Lösung 5 bis 40 Gew.-%, bevorzugt 5 bis 15 Gew.-% beträgt,
welches dadurch gekennzeichnet ist,

a. dass man dem Prozessstrom aus der Umsetzung von Silan der Formel II mit einem oder mehreren Metallsulfiden der Formel III, optional in Gegenwart eines Salzes oder mehrere Salze und optional unter Zusatz von Schwefel in wässriger $R^1$-OH-Lösung, enthaltend Polysulfansilan der Formel I, Lösungsmittel $R^1$-OH, Wasser und Prozesssalze,
mit der Waschlösung aus Schritt d, enthaltend Lösungsmittel $R^1$-OH, Wasser und Polysulfansilan der Formel I, vereinigt,
b. das Lösungsmittel $R^1$-OH und Wasser destillativ entfernt,
c. die verbleibende Suspension, enthaltend Polysulfansilan der Formel I und Prozesssalz einer Filtration oder Sedimentation unterwirft und
d. das Prozesssalz aus Schritt c mit Lösungsmittel $R^1$-OH gewaschen und anschließend getrocknet wird,

die Waschlösung, enthaltend Lösungsmittel $R^1$-OH, Wasser und Polysulfansilan der Formel I, in Prozessschritt a zurückführt.

Das erfindungsgemäße Verfahren kann kontinuierlich oder diskontinuierlich, vorzugsweise diskontinuierlich, durchgeführt werden.

Bei einem diskontinuierlichen Verfahren kann in Prozessschritt a die Waschlösung aus Schritt d aus einem vorherigen Ansatz stammen. Bei einem diskontinuierlichen Verfahren kann die Waschlösung aus Prozessschritt d in dem Prozessschritt a eines nachfolgenden Ansatzes eingesetzt werden.

Das in Schritt d eingesetzte Lösungsmittel $R^1$-OH kann von 0 Gew.-% bis zu 20 Gew.-%, vorzugsweise von 2 Gew.-% bis zu 10 Gew.-%, Wasser enthalten.

Die Prozessschritte a und b können nacheinander oder gleichzeitig durchgeführt werden.

Die eingesetzten Metallsulfide können wasserfrei oder in Wasser gelöst vorliegen oder Kristallwasser enthalten.

Der Schwefel kann in Granulatform, flüssiger Form oder Pulverform eingesetzt werden.

Die Alkylpolyethergruppe $-(R'\text{-}O)_r\text{-}R''$ kann sein

$-(CH_2\text{-}CH_2O)_2\text{-}C_8H_{17}$, $-(CH_2\text{-}CH_2O)_3\text{-}C_8H_{17}$, $-(CH_2\text{-}CH_2O)_4\text{-}C_8H_{17}$, $-(CH_2\text{-}CH_2O)_5\text{-}C_8H_{17}$, $-(CH_2\text{-}CH_2O)_6\text{-}C_8H_{17}$, $-(CH_2\text{-}CH_2O)_7\text{-}C_8H_{17}$,

$-(CH(CH_3)\text{-}CH_2O)_2\text{-}C_8H_{17}$, $-(CH(CH_3)\text{-}CH_2O)_3\text{-}C_8H_{17}$, $-(CH(CH_3)\text{-}CH_2O)_4\text{-}C_8H_{17}$, $-(CH(CH_3)\text{-}CH_2O)_5\text{-}C_8H_{17}$, $-(CH(CH_3)\text{-}CH_2O)_6\text{-}C_8H_{17}$, $-(CH(CH_3)\text{-}CH_2O)_7\text{-}C_8H_{17}$,

$-(CH_2\text{-}CH_2O)_2\text{-}C_9H_{19}$, $-(CH_2\text{-}CH_2O)_3\text{-}C_9H_{19}$, $-(CH_2\text{-}CH_2O)_4\text{-}C_9H_{19}$, $-(CH_2\text{-}CH_2O)_5\text{-}C_9H_{19}$,

$-(CH_2-CH_2O)_6-C_9H_{19}$, $-(CH_2-CH_2O)_7-C_9H_{19}$,

$-(CH(CH_3)-CH_2O)_2-C_9Hi_9$, $-(CH(CH_3)-CH_2O)_3-C_9H_{19}$, $-(CH(CH_3)-CH_2O)_4-C_9H_{19}$, $-(CH(CH_3)-CH_2O)_5-C_9H_{19}$, $-(CH(CH_3)-CH_2O)_6-C_9H_{19}$, $-(CH(CH_3)-CH_2O)_7-C_9H_{19}$,

$-(CH_2-CH_2O)_2-C_{10}H_{21}$, $-(CH_2-CH_2O)_3-C_{10}H_{21}$, $-(CH_2-CH_2O)_4-C_{10}H_{21}$, $-(CH_2-CH_2O)_5-C_{10}H_{21}$, $-(CH_2-CH_2O)_6-C_{10}H_{21}$, $-(CH_2-CH_2O)_7-C_{10}H_{21}$,

$-(CH(CH_3)-CH_2O)_2-C_{10}H_{21}$, $-(CH(CH_3)-CH_2O)_3-C_{10}H_{21}$, $-(CH(CH_3)-CH_2O)_4-C_{10}H_{21}$, $-(CH(CH_3)-CH_2O)_5-CH_{21}$, $-(CH(CH_3)-CH_2O)_6-C_{10}H_{21}$, $-(CH(CH_3)-CH_2O)_7-C_{10}H_{21}$,

$-(CH_2-CH_2O)_2-C_{11}H_{23}$, $-(CH_2-CH_2O)_3-C_{11}H_{23}$, $-(CH_2-CH_2O)_4-C_{11}H_{23}$, $-(CH_2-CH_2O)_5-C_{11}H_{23}$, $-(CH_2-CH_2O)_6-C_{11}H_{23}$, $-(CH_2-CH_2O)_7-C_{11}H_{23}$,

$-(CH(CH_3)-CH_2O)_2-C_{11}H_{23}$, $-(CH(CH_3)-CH_2O)_3-C_{11}H_{23}$, $-(CH(CH_3)-CH_2O)_4-C_{11}H_{23}$, $-(CH(CH_3)-CH_2O)_5-C_{11}H_{23}$, $-(CH(CH_3)-CH_2O)_6-C_{11}H_{23}$, $-(CH(CH_3)-CH_2O)_7-C_{11}H_{23}$,

$-(CH_2-CH_2O)_2-C_{12}H_{25}$, $-(CH_2-CH_2O)_3-C_{12}H_{25}$, $-(CH_2-CH_2O)_4-C_{12}H_{25}$, $-(CH_2-CH_2O)_5-C_{12}H_{25}$, $-(CH_2-CH_2O)_6-C_{12}H_{25}$, $-(CH_2-CH_2O)_7-C_{12}H_{25}$,

$-(CH(CH_3)-CH_2O)_2-C_{12}H_{25}$, $-(CH(CH_3)-CH_2O)_3-C_{12}H_{25}$, $-(CH(CH_3)-CH_2O)_4-C_{12}H_{25}$, $-(CH(CH_3)-CH_2O)_5-C_{12}H_{25}$, $-(CH(CH_3)-CH_2O)_6-C_{12}H_{25}$, $-(CH(CH_3)-CH_2O)_7-C_{12}H_{25}$,

$-(CH_2-CH_2O)_2-C_{13}H_{27}$, $-(CH_2-CH_2O)_3-C_{13}H_{27}$, $-(CH_2-CH_2O)_4-C_{13}H_{27}$, $-(CH_2-CH_2O)_5-C_{13}H_{27}$, $-(CH_2-CH_2O)_6-C_{13}H_{27}$, $-(CH_2-CH_2O)_7-C_{13}H_{27}$,

$-(CH(CH_3)-CH_2O)_2-C_{13}H_{27}$, $-(CH(CH_3)-CH_2O)_3-C_{13}H_{27}$, $-(CH(CH_3)-CH_2O)_4-C_{13}H_{27}$, $-(CH(CH_3)-CH_2O)_5-C_{13}H_{27}$, $-(CH(CH_3)-CH_2O)_6-C_{13}H_{27}$, $-(CH(CH_3)-CH_2O)_7-C_{13}H_{27}$,

$-(CH_2-CH_2O)_2-C_{14}H_{29}$, $-(CH_2-CH_2O)_3-C_{14}H_{29}$, $-(CH_2-CH_2O)_4-C_{14}H_{29}$, $-(CH_2-CH_2O)_5-C_{14}H_{29}$, $-(CH_2-CH_2O)_6-C_{14}H_{29}$, $-(CH_2-CH_2O)_7-C_{14}H_{29}$,

$-(CH(CH_3)-CH_2O)_2-C_{14}H_{29}$, $-(CH(CH_3)-CH_2O)_3-C_{14}H_{29}$, $-(CH(CH_3)-CH_2O)_4-C_{14}H_{29}$, $-(CH(CH_3)-CH_2O)_5-C_{14}H_{29}$, $-(CH(CH_3)-CH_2O)_6-C_{14}H_{29}$, $-(CH(CH_3)-CH_2O)_7-C_{14}H_{29}$,

$-(CH_2-CH_2O)_2-C_{15}H_{31}$, $-(CH_2-CH_2O)_3-C_{15}H_{31}$, $-(CH_2-CH_2O)_4-C_{15}H_{31}$, $-(CH_2-CH_2O)_5-C_{15}H_{31}$, $-(CH_2-CH_2O)_6-C_{15}H_{31}$, $-(CH_2-CH_2O)_7-C_{15}H_{31}$,

$-(CH(CH_3)-CH_2O)_2-C_{15}H_{31}$, $-(CH(CH_3)-CH_2O)_3-C_{15}H_{31}$, $-(CH(CH_3)-CH_2O)_4-C_{15}H_{31}$, $-(CH(CH_3)-CH_2O)_5-C_{15}H_{31}$, $-(CH(CH_3)-CH_2O)_6-C_{15}H_{31}$, $-(CH(CH_3)-CH_2O)_7-C_{15}H_{31}$,

$-(CH_2-CH_2O)_2-C_{16}H_{33}$, $-(CH_2-CH_2O)_3-C_{16}H_{33}$, $-(CH_2-CH_2O)_4-C_{16}H_{33}$, $-(CH_2-CH_2O)_5-C_{16}H_{33}$, $-(CH_2-CH_2O)_6-C_{16}H_{33}$, $-(CH_2-CH_2O)_7-C_{16}H_{33}$,

$-(CH(CH_3)-CH_2O)_2-C_{16}H_{33}$, $-(CH(CH_3)-CH_2O)_3-C_{16}H_{33}$, $-(CH(CH_3)-CH_2O)_4-C_{16}H_{33}$, $-(CH(CH_3)-CH_2O)_5-C_{16}H_{33}$, $-(CH(CH_3)-CH_2O)_6-C_{16}H_{33}$ oder $-(CH(CH_3)-CH_2O)_7-C_{16}H_{33}$.

Polysulfansilan der Formel I können sein:

$[(MeO)_3Si(CH_2)_3]_2S$, $[(MeO)_3Si(CH_2)_3]_2S_2$, $[(MeO)_3Si(CH_2)_3]_2S_3$, $[(MeO)_3Si(CH_2)_3]_2S_4$, $[(MeO)_3Si(CH_2)_3]_2S_5$, $[(MeO)_3Si(CH_2)_3]_2S_6$, $[(MeO)_3Si(CH_2)_3]_2S_7$, $[(MeO)_3Si(CH_2)_3]_2S_8$, $[(MeO)_3Si(CH_2)_3]_2S_9$, $[(MeO)_3Si(CH_2)_3]_2S_{10}$,

$[(EtO)_3Si(CH_2)_3]_2S$, $[(EtO)_3Si(CH_2)_3]_2S_2$, $[(EtO)_3Si(CH_2)_3]_2S_3$, $[(EtO)_3Si(CH_2)_3]_2S_4$, $[(EtO)_3Si(CH_2)_3]_2S_5$, $[(EtO)_3Si(CH_2)_3]_2S_6$, $[(EtO)_3Si(CH_2)_3]_2S_7$, $[(EtO)_3Si(CH_2)_3]_2S_8$, $[(EtO)_3Si(CH_2)_3]_2S_9$, $[(EtO)_3Si(CH_2)_3]_2S_{10}$,

$[(C_3H_7O)_3Si(CH_2)_3]_2S$, $[(C_3H_7O)_3Si(CH_2)_3]_2S_2$, $[(C_3H_7O)_3Si(CH_2)_3]_2S_3$, $[(C_3H_7O)_3Si(CH_2)_3]_2S_4$, $[(C_3H_7O)_3Si(CH_2)_3]_2S_5$, $[(C_3H_7O)_3Si(CH_2)_3]_2S_6$, $[(C_3H_7O)_3Si(CH_2)_3]_2S_7$, $[(C_3H_7O)_3Si(CH_2)_3]_2S_8$, $[(C_3H_7O)_3Si(CH_2)_3]_2S_9$, $[(C_3H_7O)_3Si(CH_2)_3]_2S_{10}$.

Vorzugsweise können als Silane der Formel II

3-Chlorbutyl(triethoxysilan), 3-Chlorbutyl(trimethoxysilan), 3-Chlorbutyl(diethoxymethoxysilan), 3-Chlorpropyl(triethoxysilan), 3-Chlorpropyl(trimethoxysilan), 3-Chlorpropyl(diethoxymethoxysilan), 2-Chlorethyl(triethoxysilan), 2-Chlorethyl(trimethoxysilan), 2-Chlorethyl(diethoxymethoxysilan), 1-Chlormethyl(triethoxysilan), 1-Chlormethyl(trimethoxysilan), 1-Chlormethyldiethoxymethoxysilan), 3-Chlorpropyl(diethoxymethylsilan), 3-Chlorpropyl(dimethoxymethylsilan), 2-Chlorethyl(diethoxymethylsilan), 2-Chlorethyl(dimethoxymethylsilan), 1-Chlormethyl(diethoxymethylsilan), 1-Chlormethyl(dimethoxymethylsilan), 3-Chlorpropyl(ethoxydimethylsilan), 3-Chlorpropyl(methoxydimethylsilan), 2-Chlorethyl(ethoxydimethylsilan), 2-Chlorethyl(methoxydimethylsilan), 1-Chlormethyl(ethoxydimethylsilan), 1-Chlormethyl(methoxydimethylsilan),
$[(C_9H_{19}O-(CH_2-CH_2O)_2](MeO)_2Si(CH_2)_3Cl$,
$[(C_9H_{19}O-(CH_2-CH_2O)_3](MeO)_2Si(CH_2)_3Cl$,
$[(C_9H_{19}O-(CH_2-CH_2O)_4](MeO)_2Si(CH_2)_3Cl$,
$[(C_9H_{19}O-(CH_2-CH_2O)_3](MeO)_2Si(CH_2)_3Cl$,
$[(C_9H_{19}O-(CH_2-CH_2O)_3](MeO)_2Si(CH_2)_3Cl$,
$[(C_{12}H_{25}O-(CH_2-CH_2O)_2](MeO)_2Si(CH_2)_3Cl$,
$[(C_{12}H_{25}O-(CH_2-CH_2O)_3](MeO)_2Si(CH_2)_3Cl$,
$[(C_{12}H_{25}O-(CH_2-CH_2O)_4](MeO)_2Si(CH_2)_3Cl$,
$[(C_{12}H_{25}O-(CH_2-CH_2O)_5](MeO)_2Si(CH_2)_3Cl$,
$[(C_{12}H_{25}O-(CH_2-CH_2O)_6](MeO)_2Si(CH_2)_3Cl$,
$[(C_{13}H_{27}O-(CH_2-CH_2O)_2](MeO)_2Si(CH_2)_3Cl$,
$[(C_{13}H_{27}O-(CH_2-CH_2O)_3](MeO)_2Si(CH_2)_3Cl$,
$[(C_{13}H_{27}O-(CH_2-CH_2O)_4](MeO)_2Si(CH_2)_3Cl$,
$[(C_{13}H_{27}O-(CH_2-CH_2O)_5](MeO)_2Si(CH_2)_3Cl$,
$[(C_{13}H_{27}O-(CH_2-CH_2O)_6](MeO)_2Si(CH_2)_3Cl$,
$[(C_{14}H_{29}O-(CH_2-CH_2O)_2](MeO)_2Si(CH_2)_3Cl$,
$[(C_{14}H_{29}O-(CH_2-CH_2O)_3](MeO)_2Si(CH_2)_3Cl$,
$[(C_{14}H_{29}O-(CH_2-CH_2O)_4](MeO)_2Si(CH_2)_3Cl$,
$[(C_{14}H_{29}O-(CH_2-CH_2O)_5](MeO)_2Si(CH_2)_3Cl$,
$[(C_{14}H_{29}O-(CH_2-CH_2O)_6](MeO)_2Si(CH_2)_3Cl$,
$[(C_9H_{19}O-(CH_2-CH_2O)_2]_2(MeO)Si(CH_2)_3Cl$,
$[(C_9H_{19}O-(CH_2-CH_2O)_3]_2(MeO)Si(CH_2)_3Cl$,
$[(C_9H_{19}O-(CH_2-CH_2O)_4]_2(MeO)Si(CH_2)_3Cl$,
$[(C_9H_{19}O-(CH_2-CH_2O)_5]_2(MeO)Si(CH_2)_3Cl$,
$[(C_9H_{19}O-(CH_2-CH_2O)_6]_2(MeO)Si(CH_2)_3Cl$,
$[(C_{12}H_{25}O-(CH_2-CH_2O)_2]_2(MeO)Si(CH_2)_3Cl$,
$[(C_{12}H_{25}O-(CH_2-CH_2O)_3]_2(MeO)Si(CH_2)_3Cl$,
$[(C_{12}H_{25}O-(CH_2-CH_2O)_4]_2(MeO)Si(CH_2)_3Cl$,
$[(C_{12}H_{25}O-(CH_2-CH_2O)_5]_2(MeO)Si(CH_2)_3Cl$,
$[(C_{12}H_{25}O-(CH_2-CH_2O)_6]_2(MeO)Si(CH_2)_3Cl$,
$[(C_{13}H_{27}O-(CH_2-CH_2O)_2]_2(MeO)Si(CH_2)_3Cl$,
$[(C_{13}H_{27}O-(CH_2-CH_2O)_3]_2(MeO)Si(CH_2)_3Cl$,
$[(C_{13}H_{27}O-(CH_2-CH_2O)_4]_2(MeO)Si(CH_2)_3Cl$,
$[(C_{13}H_{27}O-(CH_2-CH_2O)_5]_2(MeO)Si(CH_2)_3Cl$,
$[(C_{13}H_{27}O-(CH_2-CH_2O)_6]_2(MeO)Si(CH_2)_3Cl$,
$[(C_{14}H_{29}O-(CH_2-CH_2O)_2]_2(MeO)Si(CH_2)_3Cl$,
$[(C_{14}H_{29}O-(CH_2-CH_2O)_3]_2(MeO)Si(CH_2)_3Cl$,
$[(C_{14}H_{29}O-(CH_2-CH_2O)_4]_2(MeO)Si(CH_2)_3Cl$,
$[(C_{14}H_{29}O-(CH_2-CH_2O)_5]_2(MeO)Si(CH_2)_3Cl$,
$[(C_{14}H_{29}O-(CH_2-CH_2O)_6]_2(MeO)Si(CH_2)_3Cl$,
$[(C_9H_{19}O-(CH_2-CH_2O)_2](EtO)_2Si(CH_2)_3Cl$,
$[(C_9H_{19}O-(CH_2-CH_2O)_3](EtO)_2Si(CH_2)_3Cl$,
$[(C_9H_{19}O-(CH_2-CH_2O)_4](EtO)_2Si(CH_2)_3Cl$,
$[(C_9H_{19}O-(CH_2-CH_2O)_5](EtO)_2Si(CH_2)_3Cl$,
$[(C_9H_{19}O-(CH_2-CH_2O)_6](EtO)_2Si(CH_2)_3Cl$,
$[(C_{12}H_{25}O-(CH_2-CH_2O)_2](EtO)_2Si(CH_2)_3Cl$,
$[(C_{12}H_{25}O-(CH_2-CH_2O)_3](EtO)_2Si(CH_2)_3Cl$,
$[(C_{12}H_{25}O-(CH_2-CH_2O)_4](EtO)_2Si(CH_2)_3Cl$,

$[(C_{12}H_{25}O-(CH_2-CH_2O)_5](EtO)_2Si(CH_2)_3Cl$,
$[(C_{12}H_{25}O-(CH_2-CH_2O)_6](EtO)_2Si(CH_2)_3Cl$,
$[(C_{13}H_{27}O-(CH_2-CH_2O)_2](EtO)_2Si(CH_2)_3Cl$,
$[(C_{13}H_{27}O-(CH_2-CH_2O)_3](EtO)_2Si(CH_2)_3Cl$,
$[(C_{13}H_{27}O-(CH_2-CH_2O)_4](EtO)_2Si(CH_2)_3Cl$,
$[(C_{13}H_{27}O-(CH_2-CH_2O)_5](EtO)_2Si(CH_2)_3Cl$,
$[(C_{13}H_{27}O-(CH_2-CH_2O)_6](EtO)_2Si(CH_2)_3Cl$,
$[(C_{14}H_{29}O-(CH_2-CH_2O)_2](EtO)_2Si(CH_2)_3Cl$,
$[(C_{14}H_{29}O-(CH_2-CH_2O)_3](EtO)_2Si(CH_2)_3Cl$,
$[(C_{14}H_{29}O-(CH_2-CH_2O)_4](EtO)_2Si(CH_2)_3Cl$,
$[(C_{14}H_{29}O-(CH_2-CH_2O)_5](EtO)_2Si(CH_2)_3Cl$,
$[(C_{14}H_{29}O-(CH_2-CH_2O)_6](EtO)_2Si(CH_2)_3Cl$,
$[(C_9H_{19}O-(CH_2-CH_2O)_2]_2(EtO)Si(CH_2)_3Cl$,
$[(C_9H_{19}O-(CH_2-CH_2O)_3]_2(EtO)Si(CH_2)_3Cl$,
$[(C_9H_{19}O-(CH_2-CH_2O)_4]_2(EtO)Si(CH_2)_3Cl$,
$[(C_9H_{19}O-(CH_2-CH_2O)_5]_2(EtO)Si(CH_2)_3Cl$,
$[(C_9H_{19}O-(CH_2-CH_2O)_6]_2(EtO)Si(CH_2)_3Cl$,
$[(C_{12}H_{25}O-(CH_2-CH_2O)_2]_2(EtO)Si(CH_2)_3Cl$,
$[(C_{12}H_{25}O-(CH_2-CH_2O)_3]_2(EtO)Si(CH_2)_3Cl$,
$[(C_{12}H_{25}O-(CH_2-CH_2O)_4]_2(EtO)Si(CH_2)_3Cl$,
$[(C_{12}H_{25}O-(CH_2-CH_2O)_5]_2(EtO)Si(CH_2)_3Cl$,
$[(C_{12}H_{25}O-(CH_2-CH_2O)_6]_2(EtO)Si(CH_2)_3Cl$,
$[(C_{13}H_{27}O-(CH_2-CH_2O)_2]_2(EtO)Si(CH_2)_3Cl$,
$[(C_{13}H_{27}O-(CH_2-CH_2O)_3]_2(EtO)Si(CH_2)_3Cl$,
$[(C_{13}H_{27}O-(CH_2-CH_2O)_4]_2(EtO)Si(CH_2)_3Cl$,
$[(C_{13}H_{27}O-(CH_2-CH_2O)_5]_2(EtO)Si(CH_2)_3Cl$,
$[(C_{13}H_{27}O-(CH_2-CH_2O)_6]_2(EtO)Si(CH_2)_3Cl$,
$[(C_{14}H_{29}O-(CH_2-CH_2O)_2]_2(EtO)Si(CH_2)_3Cl$,
$[(C_{14}H_{29}O-(CH_2-CH_2O)_3]_2(EtO)Si(CH_2)_3Cl$,
$[(C_{14}H_{29}O-(CH_2-CH_2O)_4]_2(EtO)Si(CH_2)_3Cl$,
$[(C_{14}H_{29}O-(CH_2-CH_2O)_5]_2(EtO)Si(CH_2)_3Cl$,
$[(C_{14}H_{29}O-(CH_2-CH_2O)_6]_2(EtO)Si(CH_2)_3Cl$,
$[(C_9H_{19}O-(CH_2-CH_2O)_2]_3Si(CH_2)_3Cl$,
$[(C_9H_{19}O-(CH_2-CH_2O)_3]_3Si(CH_2)_3Cl$,
$[(C_9H_{19}O-(CH_2-CH_2O)_4]_3Si(CH_2)_3Cl$,
$[(C_9H_{19}O-(CH_2-CH_2O)_5]_3Si(CH_2)_3Cl$,
$[(C_9H_{19}O-(CH_2-CH_2O)_6]_3Si(CH_2)_3Cl$,
$[(C_{12}H_{25}O-(CH_2-CH_2O)_2]_3Si(CH_2)_3Cl$,
$[(C_{12}H_{25}O-(CH_2-CH_2O)_3]_3Si(CH_2)_3Cl$,
$[(C_{12}H_{25}O-(CH_2-CH_2O)_4]_3Si(CH_2)_3Cl$,
$[(C_{12}H_{25}O-(CH_2-CH_2O)_5]_3Si(CH_2)_3Cl$,
$[(C_{12}H_{25}O-(CH_2-CH_2O)_6]_3Si(CH_2)_3Cl$,
$[(C_{13}H_{27}O-(CH_2-CH_2O)_2]_3Si(CH_2)_3Cl$,
$[(C_{13}H_{27}O-(CH_2-CH_2O)_3]_3Si(CH_2)_3Cl$,
$[(C_{13}H_{27}O-(CH_2-CH_2O)_4]_3Si(CH_2)_3Cl$,
$[(C_{13}H_{27}O-(CH_2-CH_2O)_5]_3Si(CH_2)_3Cl$,
$[(C_{13}H_{27}O-(CH_2-CH_2O)_6]_3Si(CH_2)_3Cl$,
$[(C_{14}H_{29}O-(CH_2-CH_2O)_2]_3Si(CH_2)_3Cl$,
$[(C_{14}H_{29}O-(CH_2-CH_2O)_3]_3Si(CH_2)_3Cl$,
$[(C_{14}H_{29}O-(CH_2-CH_2O)_4]_3Si(CH_2)_3Cl$,
$[(C_{14}H_{29}O-(CH_2-CH_2O)_5]_3Si(CH_2)_3Cl$ oder
$[(C_{14}H_{29}O-(CH_2-CH_2O)_6]_3Si(CH_2)_3Cl$
eingesetzt werden.

Das Verfahren kann bei Temperaturen von 0°C bis 180°C, vorzugsweise bei Temperaturen von 30°C bis 150°C, besonders bevorzugt bei Temperaturen von 50°C bis 100°C, außerordentlich bevorzugt bei Temperaturen von 60°C bis 90 °C, durchgeführt werden.

**Umsetzung von Silan der Formel II mit einem oder mehreren Metallsulfiden der Formel III:**

Die Umsetzung von Silan der Formel II mit einem oder mehreren Metallsulfiden der Formel III kann in beliebiger Dosierreihenfolge durchgeführt werden, vorzugsweise in dem nach der Dosierung der übrigen Rohstoffe Metallsulfid oder Metallhydrogensulfid oder Silan der Formel II zur Temperatursteuerung in Portionen oder gleichmäßig über einen Zeitraum von 0,1 bis 10 h, vorzugsweise 0,5 bis 2 h, zugegeben wird.

Das Metallsulfid der Formel III, gegebenenfalls Schwefel, gegebenenfalls Metallcarbonat /Metallhydrogencarbonat und Lösungsmittel kann vor der Reaktion komplett oder teilweise vorgemischt werden.

Halogenalkylalkoxysilan der Formel II, gegebenenfalls Schwefel, gegebenenfalls Metallcarbonat /Metallhydrogencarbonat und Lösungsmittel kann vor der Reaktion komplett oder teilweise zusammengeführt oder vorgemischt werden.

Die Vormischung kann innerhalb oder außerhalb des Reaktionsraumes stattfinden.

Das molare Verhältnis zwischen eingesetzten Metallsulfiden der Formel III und Silan der Formel II kann im Bereich von 0,2 und 2, bevorzugt zwischen 0,4 und 1, besonders bevorzugt zwischen 0,4 und 0,7, liegen.

Das molare Verhätnis zwischen eingesetzten Metallhydrogensulfiden und Metallcarbonaten kann zwischen 0,5 und 2, bevorzugt zwischen 0,8 und 1,2, liegen.

Das molare Verhältnis zwischen eingesetzem Lösungsmittel $R^1OH$ und eingesetztem Silan der Formel II kann 0,5 bis 100, bevorzugt 1 bis 20, besonders bevorzugt 2 bis 5, betragen.

Das Lösungsmittel $R^1OH$ kann 0 Gew-% bis 20 Gew.-%, vorzugsweise von 2 Gew.-% bis 10 Gew.-% Wasser enthalten.

Die produktbenetzten Teile der Apparatur zur Durchführung der Erfindung können aus Metallen, Kunststoff, Keramik oder Glas bestehen. Bevorzugt können Anlagen aus korrosionsbeständigen Werkstoffen, beispielsweise emailliertem oder mit Kunststoff beschichtetem Stahl oder legiertem Stahl eingesetzt werden. Besonders bevorzugt können Anlagen aus emailiertem Stahl, Edelstahl, Duplexstahl, Tantal oder Hastelloi eingesetzt werden.

Die Reaktion kann in einem Reaktionsrohr oder Reaktionskessel, vorzugsweise in einem Reaktionskessel, durchgeführt werden. Das erfindungsgemäße Verfahren kann in einem offenen oder geschlossenen Gefäß durchgeführt werden. Die Reaktion kann bevorzugt in einem geschlossenen Gefäß durchgeführt werden.

Die Vermischung des Reaktorinhaltes kann durch interne oder externe Umwälzung vonstatten gehen. Der Reaktionsapparat kann beheizt und/oder gekühlt sein. Die Reaktionswärme kann über direkte oder indirekte Kühlung abgeführt werden. Die Reaktionswärme kann über Verdampfungskühlung abgeführt werden. Zur Verdampfungskühlung kann das im Prozess befindliche Lösungsmittel verdampft werden. Vorzugsweise kann die Reaktion in einem Rührreaktor stattfinden, welcher über Halbrohrschlangen oder Mantel beheizt und gekühlt ist. Die Reaktion kann in einem geschlossenen System stattfinden. Vor Zugabe einzelner Rohstoffe kann der Reaktor evakuiert werden. Besonders vorteilhaft ist eine Evakuierung vor der Dosierung von Silan der Formel II und Metallsulfiden oder Metallhydrogensulfiden. Außerordentlich bevorzugt kann das Reaktionsgefäß vor Zugabe von Metallsulfiden oder Metallhydrogensulfiden evakuiert werden. Das erfindungsgemäße Verfahren kann so durchgeführt werden, dass ein entstehendes Gas nicht aus dem Reaktionsraum entweichen kann. Das geschlossene Gefäß kann bevorzugt ein aus der Technik bekanntes Reaktionsgefäß sein, das es erlaubt, bei Drücken von 10 Pa bis 2 MPa und Temperaturen von 0°C bis 200°C zu arbeiten. Das geschlossene Gefäß kann besonders bevorzugt ein aus der Technik bekanntes Reaktionsgefäß sein, das es erlaubt, bei Drücken 10 Pa bis 1,2 MPa und Temperaturen von 0°C bis 150°C zu arbeiten.

**Prozessschritt a:**

Die Vereinigung in Prozessschritt a zwischen dem Prozessstrom aus der Umsetzung von Silan der Formel II mit einem oder mehreren Metallsulfiden der Formel III und der Waschlösung aus Prozessschritt d kann nach oder vor Beendigung einer vollständigen Umsetzung von Silan der Formel II mit einem oder mehreren Metallsulfiden der Formel III durchgeführt werden. Die Vereinigung kann innerhalb oder außerhalb des zur Reaktion verwendeten Behältnisses stattfinden. Die Vereinigung kann innerhalb des zur Destillation verwendeten Behältnisses stattfinden. Die Vereinigung kann vor oder während des Destillationsvorganges (Prozessschritt b) durchgeführt werden.

**Prozessschritt b:**

Die destillative Entfernung des Lösungsmittels gemäß Prozessschritt b kann in einem Rührkessel stattfinden. Der Rührkessel kann auch der Reaktionsapparat sein. Die destillative Entfernung des Lösungsmittels kann im Temperaturbereich von 0°C bis 150°C bei einem Druck von 0,5 kPa absolut bis 150 kPa absolut, bevorzugt in einem Bereich von 40°C bis 120°C bei einem Druck von 0,5 kPa absolut bis 30 kPa absolut, stattfinden. Im Verlauf der destillativen Entfernung des Lösungsmittels kann der Druck im Destillationsapparat schrittweise oder kontinuierlich reduziert werden. Das verdampfte Lösungsmittel kann unmittelbar an dessen Verdampfung oder später durch Rektifikation aufgereinigt

oder konzentriert werden. Während der Verdampfung kann der Inhalt des Destillationsapparates durchmischt werden. Diese Durchmischung kann sowohl intern als auch extern durch geeignete Maßnahmen stattfinden. Geeignete Maßnahmen zur Durchmischung sind beispielsweise Rührwerke, Umwälzpumpen oder das Einblasen von Gasen oder verdampften Flüsssigkeiten, insbesondere Wasserdampf.

**Prozessschritt c:**

Zur Feststoffabtrennung gemäß Prozessschritt c kann in unterschiedlichen Filtrations - und Sedimentationsmaschinen durchgeführt werden. Die Feststoffabtrennung kann kontinuierlich oder diskontinuierlich stattfinden. Als Filtrationsmaschinen können Filtrationszentrifugen, Filterpressen oder Filtertrockner eingesetzt werden. Als Sedimentationsmaschine kann eine Vollmantelschneckenzentrifuge eingesetzt werden. Während des Filtrationsvorganges kann es hilfreich sein, eine Volumenkontraktion des Filterkuchens durch Glattstreichen oder Kompression des Filterkuchens auszugleichen. Dazu geeignet ist unter anderem das Pflugwerk eines Filtertrockners.

**Prozessschritt d:**

Die Wäsche des Feststoffes gemäß Prozessschitt d kann innerhalb oder außerhalb des im vorherigen Prozessschrittes verwendeten Anlagenteils durchgeführt werden. Die Wäsche kann kontinuierlich oder diskontinuierlich durchgeführt werden. Der zu waschende Feststoff kann während der Wäsche in geeigneter Weise mit dem Lösungsmittel $R^1$-OH vermischt werden. Die Trennung zwischen der Waschlösung und dem gewaschenen Feststoff kann durch Sedimentation oder durch Filtration vollzogen werden. Zur Trennung des gewaschenen Feststoffes von der Waschlösung können Vollmantelschneckenzentrifungen, Filtertrockner, Filterpressen sowie Filterzentrifugen eingesetzt werden. In bevorzugter Weise kann die Wäsche des angefallenen Filterkuchens in einem Filtertrockner stattfinden.

Die Trocknung des Feststoffes gemäß Prozessschritt d kann innerhalb oder außerhalb des zur Wäsche des Feststoffes verwendeten Aggregates durchgeführt werden. Die Trocknung kann diskontinuierlich oder kontinuierlich durchgeführt werden. Die Trocknung kann bei Temperaturen von 0°C bis 150°C, bevorzugt bei Temperaturen von 40°C bis 100°C, durchgeführt werden. Der Druck während der Trocknung kann 0,1 kPa absolut bis 150 kPa absolut, bevorzugt 1 kPa absolut bis 102 kPa absolut, betragen. Im Verlauf des Trocknungsvorganges kann der Druck abgesenkt und / oder die Temperatur gesteigert werden. Zur Trocknung können Gase eingesetzt werden. Besonders eignen sich Stickstoff oder Luft. Die Trocknung des Feststoffes kann bevorzugt in einem Filtertrockner durchgeführt werden.

Die Prozessschritte c und d können im gleichen Apparat durchgeführt werden.

Ein Netzmittel kann vor oder während der Prozessschritte zugegeben werden.

Ein Vorteil des erfindungsgemäßen Verfahrens ist die vollständige Entfernung des Lösungsmittels aus der Suspension, welche durch die Bereitstellung einer ausreichenden Menge an Flüssigkeit zur Aufrechterhaltung von Rühr- und Fließfähigkeit während des Destillationsvorganges ermöglicht wird. Ein weiterer Vorteil ist die bessere Handhabbarkeit der Suspension nach Beendigung der Destillation. Außerdem ist die Ausbeuteerhöhung und die Erhöhung des Monomergehaltes durch das erfindungsgemäße Verfahren vorteilhaft.

**Beispiele:**

Die durchschnittliche Schwefelkettenlänge wurde mit einer in ASTM D 6844 beschriebenen Analyse bestimmt.

Zur Bestimmung des Monomergehaltes wurden die Peakflächen (area) der Probenbestandteile S2 bis S10 mit den in der ASTM D 6844 genannten Responsefaktoren multipliziert und deren Summe mit den um die Responsefaktoren korrigierten Peakflächen S2 bis S10 eines Standards mit bekanntem Monomergehalt gemäß folgender Formel ins Verhältnis gesetzt:

$$\mathrm{Mon}_{(sample)} = \frac{\mathrm{Mon}_{(std)} \cdot \left( \sum_{n=2}^{10} \left( \mathrm{area}_{(n)} \cdot \mathrm{response\ factor}_{(n)} \right) \right)_{sample}}{\sum_{n=2}^{10} \left( \mathrm{area}_{(n)} \cdot \mathrm{response\ factor}_{(n)} \right)_{(std)}} \quad [\%]$$

Beispiel 1 (Vergleichsbeispiel):

In einen 2000 ml fassenden Druckreaktor wurden 477 g Ethanol, 53 g Wasser, 137,2 g Natriumcarbonat, 38,6 g Schwefel, sowie 109,2 g Natriumhydrogensulfid mit einem Wassergehalt von 29 % eingewogen. Der Reaktor wurde verschlossen und auf 10 kPa absolut evakuiert. Anschließend wurde der Reaktorinhalt unter Rühren auf 70°C aufgeheizt und über einen Zeitraum von 45 Minuten 554,5 g Chloropropyltriethoxysilan bei einer Temperatur von 70° C bis 73°C

zugegeben. Danach wurde der Reaktorinhalt auf 78 °C aufgeheizt und für weitere 145 Minuten verweilen lassen.

Nach Abkühlen des Reaktorinhaltes auf 45 °C wurde begonnen, unter Vakuum Ethanol-Wassergemisch aus der im Reaktor verbliebenen Suspension abzuziehen. Nach Erreichen einer Temperatur von 120 °C wurde die im Reaktor befindliche Suspension auf 30 °C abgekühlt. Der Reaktor wurde geöffnet und dessen pastöser Inhalt in eine Prozellannutsche überführt. Nach einstündiger Filtration unter Vakuum konnten 323,9 g Bis(triethoxysilylpropyl)polysulfan - Produkt mit einer durchschnittlichen Schwefelkettenlänge von 2,16 und einem Monomergehalt von 80,3% gewonnen werden.

Anschließend wurde der in der Porzellannutsche verbliebene Filterkuchen aus Beispiel 1 mit einem Gemisch aus 477 g Ethanol und 53 g Wasser unter Vakuum gewaschen. Nach 60 Minuten wurden 542 g Waschlösung erhalten.

Beispiel 2:

In einen 2000 ml fassenden Druckreaktor wurden 477 g Ethanol, 53 g Wasser, 137,2 g Natriumcarbonat, 38,6 g Schwefel, sowie 109,2 g Natriumhydrogensulfid mit einem Wassergehalt von 29 % eingewogen. Der Reaktor wurde verschlossen und auf 10 kPa absolut evakuiert. Danach wurde der Reaktorinhalt unter Rühren auf 70°C aufgeheizt und über einen Zeitraum von 45 Minuten 554,5 g Chloropropyltriethoxysilan bei einer Temperatur von 70° C bis 73°C zugegeben. Anschließend wurde der Reaktorinhalt auf 78 °C aufgeheizt und für weitere 145 Minuten verweilen lassen.

Nach Abkühlen des Reaktorinhaltes auf 45 °C wurde begonnen, unter Vakuum Ethanol-Wassergemisch aus der im Reaktor verbleibenden Suspension abzuziehen. Nachdem 250 g Destillat aufgefangen waren, wurde das vorher durch Wäsche des aus Beispiel 1 angefallenen Filterkuchens gewonnene Waschlösung zugegeben und weiter destilliert. Nach Erreichen einer Temperatur von 120 °C wurde die im Reaktor befindliche Suspension auf 30 °C abgekühlt. Die Zähigkeit des Reaktorinhaltes war derart niedrig, dass die Suspension über den Bodenablass des Reaktors in eine Prozellannutsche überführt werden konnte.

Nach einstündiger Filtration unter Vakuum konnten 525,7 g Bis(triethoxysilylpropyl)polysulfan - Produkt mit einer durchschnittlichen Schwefelkettenlänge von 2,14 und einem Monomergehalt von 86,0 % gewonnen werden.

## Patentansprüche

**1.** Verfahren zur Herstellung von Polysulfansilanen der Formel I

$$(R^1O)_{3-m}R^2{}_mSi\text{-}R^3\text{-}S_x\text{-}R^3\text{-}SiR^2{}_m(OR^1)_{3-m} \qquad I,$$

wobei $R^1$ gleich oder verschieden sind und C1-C10-Alkylgruppen, Phenylgruppen oder Alkylpolyethergruppen $-(R'-O)_r-R''$ sind, mit R' gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind, r eine ganze Zahl von 1 bis 30 und R" unsubstituierte oder substituierte, verzweigte oder unverzweigte einbindige Alkyl-, Alkenyl-, Aryl- oder Aralkylgruppe sind,
$R^2$ gleich oder verschieden sind und C6-C20-Arylgruppen, C1-C10-Alkylgruppen, C2-C20-Alkenylgruppen, C7-C20-Aralkylgruppen oder Halogene sind,
$R^3$ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppen sind,
und m gleich oder verschieden sind und 0, 1, 2 oder 3 sind,
x ist 1-10,
durch Umsetzung von Silan der Formel II

$$(R^1O)_{3-m}R^2{}_mSi\text{-}R^3\text{-}Hal \qquad II,$$

wobei $R^1$, $R^2$, $R^3$ und m die oben genannten Bedeutungen haben und Hal ein Halogen ist, mit einem oder mehreren Metallsulfiden der Formel III

$$Me(SH)f \text{ und / oder } Me_{3-f}S_{x-y} \qquad III$$

wobei Me ein Element der 1. oder 2. Hauptgruppe ist,
für Me der 1.Hauptgruppe f=1 ist und für Me der 2.Hauptgruppe f=2 ist und
y einen Wert von 0 bis x-1 ist,
optional in Gegenwart eines Salzes oder mehrere Salze von einwertigen oder mehrwertigen Säuren,
unter optionalem Zusatz von y Mol Schwefel

in wässriger $R^1$-OH-Lösung, wobei $R^1$ die oben genannte Bedeutung hat, der Wassergehalt der wässrigen $R^1$-OH-Lösung 5 bis 40 Gew.-% beträgt,
**dadurch gekennzeichnet,**

a. **dass** man dem Prozessstrom aus der Umsetzung von Silan der Formel II mit einem oder mehreren Metallsulfiden der Formel III, optional in Gegenwart eines Salzes oder mehrere Salze und optional unter Zusatz von Schwefel in wässriger $R^1$-OH-Lösung, enthaltend Polysulfansilan der Formel I, Lösungsmittel $R^1$-OH, Wasser und Prozesssalze,
mit der Waschlösung aus Schritt d, enthaltend Lösungsmittel $R^1$-OH, Wasser und Polysulfansilan der Formel I, vereinigt,
b. das Lösungsmittel $R^1$-OH und Wasser destillativ entfernt,
c. die verbleibende Suspension, enthaltend Polysulfansilan der Formel I und Prozesssalz einer Filtration oder Sedimentation unterwirft und
d. das Prozesssalz aus Schritt c mit Lösungsmittel $R^1$-OH gewaschen und anschließend getrocknet wird,

die Waschlösung, enthaltend Lösungsmittel $R^1$-OH, Wasser und Polysulfansilan der Formel I, in Prozessschritt a zurückführt.

**2.** Verfahren zur Herstellung von Polysulfansilanen der Formel I gemäß Anspruch 1, **dadurch gekennzeichnet, dass** man das Verfahren bei einer Temperatur von 0°C bis 180°C durchführt.

**3.** Verfahren zur Herstellung von Polysulfansilanen der Formel I gemäß Anspruch 1, **dadurch gekennzeichnet, dass** das Polysulfansilanen der Formel I $[(EtO)_3Si(CH_2)_3]_2S$, $[(EtO)_3Si(CH_2)_3]_2S_2$, $[(EtO)_3Si(CH_2)_3]_2S_3$, $[(EtO)_3Si(CH_2)_3]_2S_4$, $[(EtO)_3Si(CH_2)_3]_2S_5$, $[(EtO)_3Si(CH_2)_3]_2S_6$, $[(EtO)_3Si(CH_2)_3]_2S_7$, $[(EtO)_3Si(CH_2)_3]_2S_8$, $[(EtO)_3Si(CH_2)_3]_2S_9$ oder $[(EtO)_3Si(CH_2)_3]_2S_{10}$ ist.

**4.** Verfahren zur Herstellung von Polysulfansilanen der Formel I gemäß Anspruch 1, **dadurch gekennzeichnet, dass** die Prozessschritte a und b gleichzeitig durchgeführt werden.

**5.** Verfahren zur Herstellung von Polysulfansilanen der Formel I gemäß Anspruch 1, **dadurch gekennzeichnet, dass** das Verfahren kontinuierlich oder diskontinuierlich durchgeführt wird.

**6.** Verfahren zur Herstellung von Polysulfansilanen der Formel I gemäß Anspruch 1, **dadurch gekennzeichnet, dass** bei einer diskontinuierlichen Fahrweise in Prozessschritt a die Waschlösung aus Schritt d aus einem vorherigen Ansatz stammt.

**7.** Verfahren zur Herstellung von Polysulfansilanen der Formel I gemäß Anspruch 1, **dadurch gekennzeichnet, dass** in Prozessschritt d zur Trennung des gewaschenen Feststoffes von der Waschlösung Vollmantelschneckenzentrifungen, Filtertrockner, Filterpressen oder Filterzentrifugen eingesetzt werden.

**8.** Verfahren zur Herstellung von Polysulfansilanen der Formel I gemäß Anspruch 1, **dadurch gekennzeichnet, dass** vor oder während der Prozessschritte ein Netzmittel zugegeben wird.

**9.** Verfahren zur Herstellung von Polysulfansilanen der Formel I gemäß Anspruch 1, **dadurch gekennzeichnet, dass** die destillative Entfernung des Lösungsmittels in Prozessschritt b im Temperaturbereich von 0°C bis 150°C bei einem Druck von 0,5 kPa absolut bis 150 kPa absolut durchgeführt wird.

## Claims

**1.** Process for preparing polysulfane silanes of the formula I

$$(R^1O)_{3-m}R^2_mSi\text{-}R^3\text{-}S_x\text{-}R^3\text{-}SiR^2_m(OR^1)_{3-m} \qquad I,$$

wherein $R^1$ are identical or different and are C1-C10 alkyl groups, phenyl groups or alkyl polyether groups -(R'-O)$_r$-R", where R' are identical or different and are a branched or unbranched, saturated or unsaturated, aliphatic, aromatic or mixed aliphatic/aromatic divalent C1-C30 hydrocarbon group, r is an integer from 1 to 30, and R" are unsubstituted or substituted, branched or unbranched monovalent alkyl, alkenyl, aryl or aralkyl group,

$R^2$ are identical or different and are C6-C20 aryl groups, C1-C10 alkyl groups, C2-C20 alkenyl groups, C7-C20 aralkyl groups or halogens,
$R^3$ are identical or different and are a branched or unbranched, saturated or unsaturated, aliphatic, aromatic or mixed aliphatic/aromatic divalent C1-C30 hydrocarbon groups,
and m are identical or different and are 0, 1, 2 or 3,
x is 1-10,
by reaction of silane of the formula II

$$(R^1O)_{3-m}R^2{}_mSi\text{-}R^3\text{-}Hal \qquad II$$

where $R^1$, $R^2$, $R^3$ and m are as defined above and Hal is a halogen,
with one or more metal sulfides of the formula III

$$Me(SH)_f \text{ and/or } Me_{3-f}S_{x-y} \qquad III$$

where Me is an element of main group 1 or 2,
f = 1 for Me of main group 1 and f = 2 for Me of main group 2 and y has a value from 0 to x-1,
optionally in the presence of one or more salts of monohydric or polyhydric acids,
with the optional addition of y mol of sulfur,
in aqueous $R^1$-OH solvent, wherein $R^1$ is as defined above,
the water content of the aqueous $R^1$-OH solution is 5% to 40% by weight, **characterized in that**

a. the process stream from the reaction of silane of the formula II with one or more metal sulfides of the formula III, optionally in the presence of one or more salts and optionally with the addition of sulfur, in aqueous $R^1$-OH solution, comprising polysulfane silanes of the formula I, solvent $R^1$-OH, water and process salts,
is combined with the wash solution from step d, comprising solvent $R^1$-OH, water and polysulfane silanes of the formula I,
b. the solvent $R^1$-OH and water are removed by distillation,
c. the remaining suspension comprising polysulfane silane of the formula I and process salt is subjected to a filtration or a sedimentation and
d. the process salt from step c is washed with solvent $R^1$-OH and then dried,

the wash solution comprising solvent $R^1$-OH, water and polysulfane silane of the formula I is recycled to process step a.

**2.** Process for preparing polysulfane silanes of the formula I according to Claim 1, **characterized in that** the process is carried out at temperatures from 0°C to 180°C.

**3.** Process for preparing polysulfane silanes of the formula I according to Claim 1, **characterized in that** the polysulfane silanes of the formula I are $[(EtO)_3Si(CH_2)_3]_2S$, $[(EtO)_3Si(CH_2)_3]_2S_2$, $[(EtO)_3Si(CH_2)_3]_2S_3$, $[(EtO)_3Si(CH_2)_3]_2S_4$, $[(EtO)_3Si(CH_2)_3]_2S_5$, $[(EtO)_3Si(CH_2)_3]_2S_6$, $[(EtO)_3Si(CH_2)_3]_2S_7$, $[(EtO)_3Si(CH_2)_3]_2S_8$, $[(EtO)_3Si(CH_2)_3]_2S_9$ or $[(EtO)_3Si(CH_2)_3]_2S_{10}$.

**4.** Process for preparing polysulfane silanes of the formula I according to Claim 1, **characterized in that** the process steps a and b are carried out in parallel.

**5.** Process for preparing polysulfane silanes of the formula I according to Claim 1, **characterized in that** the process is carried out continuously or batchwise.

**6.** Process for preparing polysulfane silanes of the formula I according to Claim 1, **characterized in that**, if carried out in a batchwise operation, the wash solution in process step a originates from step d of a previous batch.

**7.** Process for preparing polysulfane silanes of the formula I according to Claim 1, **characterized in that**, in process step d, the washed solid may be separated from the wash solution using solid-bowl decanter centrifuges, filter dryers, filter presses or filter centrifuges.

**8.** Process for preparing polysulfane silanes of the formula I according to Claim 1, **characterized in that** a wetting

agent is added before or during the process steps.

9. Process for preparing polysulfane silanes of the formula I according to Claim 1, **characterized in that** the removal of solvent by distillation in process step b takes place in a temperature range from 0°C to 150°C at a pressure from 0.5 kPa absolute to 150 kPa absolute.

## Revendications

1. Procédé pour la production de polysulfanesilanes de formule I

$$(R^1O_{3-m}R^2{}_mSi\text{-}R^3\text{-}S_x\text{-}R^3\text{-}SiR^2{}_m(OR^1)_{3-m} \qquad I,$$

dans laquelle les radicaux $R^1$ sont identiques ou différents et sont des groupes alkyle en $C_1$-$C_{10}$, des groupes phényle ou des groupes alkylpolyéther $-(R'-O)_r-R''$, où les radicaux R' sont identiques ou différents et représentent un groupe hydrocarboné en $C_1$-$C_{30}$ à deux liaisons, aliphatique, aromatique ou mixte aliphatique/aromatique, saturé ou insaturé, ramifié ou non ramifié, r est un nombre entier valant de 1 à 30 et les radicaux R" représentent un groupe alkyle, alcényle, aryle ou aralkyle à une liaison, ramifié ou non ramifié, substitué ou non substitué,
les radicaux $R^2$ sont identiques ou différents et sont des groupes aryle en $C_6$-$C_{20}$, des groupes alkyle en $C_1$-$C_{10}$, des groupes alcényle en $C_2$-$C_{20}$, des groupes aralkyle en $C_7$-$C_{20}$ ou des atomes d'halogène,
les radicaux $R^3$ sont identiques ou différents et sont des groupes hydrocarbonés en $C_1$-$C_{30}$ à deux liaisons, aliphatiques, aromatiques ou mixtes aliphatiques/ aromatiques, saturés ou insaturés, ramifiés ou non ramifiés, et les indices m sont identiques ou différents et sont 0, 1, 2 ou 3,
x est 1-10,
par mise en réaction d'un silane de formule II

$$(R^1O)_{3-m}R^2{}_mSi\text{-}R^3\text{-}Hal \qquad II,$$

dans laquelle $R^1$, $R^2$, $R^3$ et m ont les significations indiquées plus haut et Hal est un atome d'halogène, avec un ou plusieurs sulfures métalliques de formule III

$$Me(SH)_f \text{ et/ou } Me_{3-f}S_{x-y} \qquad III$$

dans laquelle Me est un élément du 1^er^ ou 2^e^ groupe principal,
lorsque Me est du 1^er^ groupe principal f est égal à 1 et lorsque Me est du 2^e^ groupe principal f est égal à 2 et y a une valeur de 0 à x-1,
en option en présence d'un sel ou de plusieurs sels d'acides monofonctionnels ou polyfonctionnels,
avec addition optionnelle de y moles de soufre en solution aqueuse de $R^1$-OH, $R^1$ ayant la signification indiquée plus haut,
la teneur en eau de la solution aqueuse de $R^1$-OH valant de 5 à 40 % en poids,
**caractérisé en ce que**

a. on réunit le courant de processus provenant de la réaction du silane de formule II avec un ou plusieurs sulfures métalliques de formule III, en option en présence d'un sel ou de plusieurs sels et en option avec addition de soufre en solution aqueuse de $R^1$-OH, contenant du polysulfanesilane de formule I, du solvant $R^1$-OH, de l'eau et des sels de processus,
avec la solution de lavage provenant de l'étape d, contenant du solvant $R^1$-OH, de l'eau et du polysulfanesilane de formule I,
b. on élimine par distillation le solvant $R^1$-OH et l'eau,
c. on soumet à une filtration ou sédimentation la suspension restante, contenant du polysulfanesilane de formule I et du sel de processus et
d. le sel de processus provenant de l'étape C est lavé avec du solvant $R^1$-OH et ensuite séché,

la solution de lavage, contenant du solvant $R^1$-OH, de l'eau et du polysulfanesilane de formule I, est renvoyée dans l'étape a de processus.

2. Procédé pour la production de polysulfanesilanes de formule I selon la revendication 1, **caractérisé en ce qu'**on

effectue le procédé à une température de 0 °C à 180 °C.

3. Procédé pour la production de polysulfanesilanes de formule I selon la revendication 1, **caractérisé en ce que** le polysulfanesilane de formule I est $[(EtO)_3Si(CH_2)_3]_2S$, $[(EtO)_3Si(CH_2)_3]_2S_2$, $[(EtO)_3Si(CH_2)_3]_2S_3$, $[(EtO)_3Si(CH_2)_3]_2S_4$, $[(EtO)_3Si(CH_2)_3]_2S_5$, $[(EtO)_3Si(CH_2)_3]_2S_6$, $[(EtO)_3Si(CH_2)_3]_2S_7$, $[(EtO)_3Si(CH_2)_3]_2S_8$, $[(EtO)_3Si(CH_2)_3]_2S_9$ ou $[(EtO)_3Si(CH_2)_3]_2S_{10}$.

4. Procédé pour la production de polysulfanesilanes de formule I selon la revendication 1, **caractérisé en ce que** les étapes a et b de processus sont effectuées simultanément.

5. Procédé pour la production de polysulfanesilanes de formule I selon la revendication 1, **caractérisé en ce que** le procédé est effectué en continu ou en mode discontinu.

6. Procédé pour la production de polysulfanesilanes de formule I selon la revendication 1, **caractérisé en ce que** dans un mode discontinu de conduite dans l'étape a de processus la solution de lavage provenant de l'étape d provient d'une opération précédente.

7. Procédé pour la production de polysulfanesilanes de formule I selon la revendication 1, **caractérisé en ce que** dans l'étape d de processus des centrifugeuses à vis et bol plein, des filtres déshydrateurs, des filtres-presse ou des centrifugeuses filtrantes sont utilisé(e)s pour la séparation du solide lavé d'avec la solution de lavage.

8. Procédé pour la production de polysulfanesilanes de formule I selon la revendication 1, **caractérisé en ce qu'**un agent mouillant est ajouté avant ou pendant les étapes de processus.

9. Procédé pour la production de polysulfanesilanes de formule I selon la revendication 1, **caractérisé en ce que** l'élimination du solvant par distillation dans l'étape b de processus est effectuée dans la plage de température de 0 °C à 150 °C sous une pression absolue de 0,5 kPa à 150 kPa.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1130023 A
- EP 1700861 A
- WO 2008025580 A1
- EP 2149579 A
- DE 102017221234 A1
- EP 3489246 A